# EUROPEAN PATENT APPLICATION

(11) **EP 4 645 871 A1**
(43) Date of publication of application: **05.11.2025**
(21) Application number: 25170303.9
(22) Date of filing: 14.04.2025
(51) Int. Cl.: H04N 21/236, H04N 21/488, H04N 21/81, H04L 51/10, H04W 4/14

(54) **INTERACTIVE BITSTREAM WITH EMBEDDED MESSAGING**

(30) Priority: 29.04.2024 US 202418649925
(71) Applicant: Avago Technologies International Sales Pte. Limited, Singapore 768923 (SG)
(72) Inventor: Neuman, Darren, Irvine, CA, 92618 (US); Neuman, Karen French, Irvine, CA, 92618 (US)
(74) Representative: Grünecker Patent- und Rechtsanwälte PartG mbB

(57) **Abstract**

A system for providing an interactive bitstream with embedded messaging is provided. The system includes a server configured to receive message data and transmit message data, wherein the message data is transmitted over a cellular network, and a media player coupled to the server, the media player configured to receive a bitstream. The media player includes a decoder configured to decode the bitstream, wherein decoding the bitstream includes extracting message data, and decoding at least one of encoded video data and encoded audio data. The media player further includes messaging logic configured to parse the message data, and transmit the message data to a user device via the server.

## Description

A portion of the disclosure of this patent document contains material that is subject to copyright protection. The copyright owner has no objection to the facsimile reproduction by anyone of the patent document or the patent disclosure as it appears in the Patent and Trademark Office patent file or records, but otherwise reserves all copyright rights whatsoever.

### FIELD

The present disclosure relates, in general, to methods, systems, and apparatuses for a bitstream with embedded interactive data.

### BACKGROUND

Consumers of conventional video content have traditionally interacted with the content they view through various means, from calling in to live programs, television shopping, and receiving real-time updates, such as breaking news or scores for various sporting events. As digital streaming has become a ubiquitous form of consuming video content, various types of data from variety of different sources can flexibly be displayed by being embedded into a respective user's bitstream and/or displayed on a system level (e.g., an overlay, banner, or other image generated by a streaming device). However, interaction with the streaming content is typically limited to the content displayed and/or through input via the streaming device, such as a set-top box (STB), smartphone, or computer.

Thus, a framework for an interactive bitstream with embedded message data is provided.

### BRIEF DESCRIPTION OF THE DRAWINGS

A further understanding of the nature and advantages of particular embodiments may be realized by reference to the remaining portions of the specification and the drawings, in which like reference numerals are used to refer to similar components. In some instances, a sub-label is associated with a reference numeral to denote one of multiple similar components. When reference is made to a reference numeral without specification to an existing sub-label, it is intended to refer to all such multiple similar components.
Fig. 1 is a schematic block diagram of a system for an interactive bitstream with embedded messaging, in accordance with various embodiments;
Fig. 2 is a schematic representation of a bitstream with embedded messaging, in accordance with various embodiments;
Fig. 3 is a flow diagram of a method for implementing messaging utilizing an interactive bitstream with embedded messaging, in accordance with various embodiments; and
Fig. 4 is a hardware block diagram of a computer system for an interactive bitstream with embedded messaging, in accordance with various embodiments.

### DETAILED DESCRIPTION OF EMBODIMENTS

Various embodiments set forth an architecture for interactive bitstream with embedded message data.

In some embodiments, an apparatus for an interactive bitstream with embedded message data is provided. The apparatus includes a processor, and a non-transitory computer-readable medium in communication with the processor. The non-transitory computer-readable medium having encoded thereon a set of instructions executable by the processor to receive a bitstream, wherein the bitstream includes encoded message data and at least one of encoded video data and encoded audio data, extract message data from the bitstream, wherein extracting message data comprises decoding the encoded message data from the bitstream, the encoded message data comprising header information, wherein the header information includes an identifier identifying the encoded message data as message data and a length of the message data, and wherein decoding the encoded message data includes parsing the header information, wherein the message data is extracted from the bitstream based, at least in part, on the header information of the encoded message data, and transmit, via a network, the message data to a user device.

In further embodiments, a system for an interactive bitstream with embedded message data is provided. The system includes a server configured to receive message data and transmit message data, wherein the message data is transmitted over a cellular network, and a media player coupled to the server, the media player configured to receive a bitstream. The media player includes a decoder configured to decode the bitstream, wherein decoding the bitstream includes extracting message data, and decoding at least one of encoded video data and encoded audio data. The media player further includes messaging logic configured to parse the message data, and transmit the message data to a user device via the server.

In further embodiments, a method for messaging utilizing an interactive bitstream with embedded message data is provided. The method includes receiving, via a media player, a bitstream, wherein the bitstream includes encoded message data and at least one of encoded video data and encoded audio data. The method further includes extracting, via the media player, message data from the bitstream, wherein extracting message data comprises decoding the encoded message data from the bitstream, the encoded message data comprising header information, wherein the header information includes an identifier identifying the encoded message data as message data and a length of the message data, and wherein decoding the encoded message data includes parsing the header information, wherein the message data is extracted from the bitstream based, at least in part, on the header information of the encoded message data of the bitstream, and transmitting, via a server, the message data to a user device over a network.

In the following description, for the purposes of explanation, numerous details are set forth to provide a thorough understanding of the described embodiments. It will be apparent to one skilled in the art, however, that other embodiments may be practiced without some of these details. Several embodiments are described herein, and while various features are ascribed to different embodiments, it should be appreciated that the features described with respect to one embodiment may be incorporated with other embodiments as well. By the same token, however, no single feature or features of any described embodiment should be considered essential to every embodiment of the invention, as other embodiments of the invention may omit such features.

When an element is referred to herein as being "connected" or "coupled" to another element (which includes mechanically, electrically, or communicatively connecting or coupling), it is to be understood that the elements can be directly connected to the other element, or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

When an element is referred to herein as being "disposed" in some manner relative to another element (e.g., disposed on, disposed between, disposed under, disposed adjacent to, or disposed in some other relative manner), it is to be understood that the elements can be directly disposed relative to the other element (e.g., disposed directly on another element), or have intervening elements present between the elements. In contrast, when an element is referred to as being "disposed directly" relative to another element, it should be understood that no intervening elements are present in the "direct" example. However, the existence of a direct disposition does not exclude other examples in which intervening elements may be present.

Moreover, the terms left, right, front, back, top, bottom, forward, reverse, clockwise and counterclockwise are used for purposes of explanation only and are not limited to any fixed direction or orientation. Rather, they are used merely to indicate relative locations and/or directions between various parts of an object and/or components.

Furthermore, the methods and processes described herein may be described in a particular order for ease of description. However, it should be understood that, unless the context dictates otherwise, intervening processes may take place before and/or after any portion of the described process, and further various procedures may be reordered, added, and/or omitted in accordance with various embodiments.

Unless otherwise indicated, all numbers used herein to express quantities, dimensions, and so forth should be understood as being modified in all instances by the term "about." In this application, the use of the singular includes the plural unless specifically stated otherwise, and use of the terms "and" and "or" means "and/or" unless otherwise indicated. Moreover, the use of the terms "including" and "having," as well as other forms, such as "includes," "included," "has," "have," and "had," should be considered non-exclusive. Also, terms such as "element" or "component" encompass both elements and components comprising one unit and elements and components that comprise more than one unit, unless specifically stated otherwise.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

With the transition to digital video and digital streaming, new opportunities for viewer engagement are presented. Text messaging has also become a ubiquitous way for users to communicate and be alerted. By combining these mediums, greater user engagement with the content via text messaging is proposed.

Thus, an interactive bitstream with embedded message data is provided. By embedding message data, such as, without limitation, short messaging service (SMS), multimedia messaging service (MMS), or rich communication services (RCS) message data, into a bitstream, a user may be able to interact with the content being viewed through a messaging service.

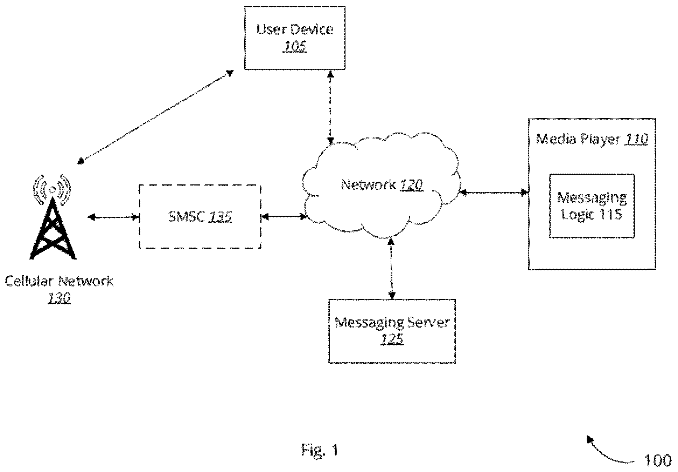

Fig. 1 is a schematic block diagram of a system 100 for an interactive bitstream with embedded messaging, in accordance with various embodiments. The system 100 includes a user device 105, media player 110, messaging logic 115, network 120, messaging server 125, cellular network 130, and short messaging service center (SMSC) 135. It should be noted that the various elements of the system 100 are schematically illustrated in Fig. 1, and that modifications to the various components and other arrangements of the system 100 may be possible and in accordance with the various embodiments.

The system 100 illustrates the various components for implementing the features of embedded messaging utilizing an interactive bitstream with embedded message data. In various examples, the user device 105 may include a device configured to receive messages. For example, the user device 105 may include, without limitation, a mobile phone (e.g., a cellular phone) or other smart device connected to a communication network, such as a smartwatch, tablet, or computer. The user device 105 may, in some embodiments, be configured to receive one or more of SMS messages, MMS messages, and/or RCS messages. In some examples, the messages may be received by the user device 105 over a communication network, such as network 120 and/or cellular network 130. In some embodiments, the user device 105 may be connected to the internet, for example, via network 120. The user device 105 may, accordingly, receive messages over the internet, via network 120. In some examples, the user device 105 may be connected to a cellular network 130, over which it may receive messages as described above.

Media player 110 may be configured to play media content to a user. For example, media player 110 may include a set-top box (STB), television, or other streaming device. An STB, as used herein, refers to a computer or other signal processing device configured to decode streaming media (e.g., decode an encoded bitstream / encoded video data) and cause the decoded streaming media to be displayed. The STB may further be configured to communicate with a server providing the streaming content, and more generally, other services (e.g., for different applications).

In some further examples, the media player 110 may be a desktop computer, laptop computer, tablet computer, mobile phone, or other device capable of media playback. In yet further embodiments, the media player 110 and user device 105 may be the same device, where an application or other software of the user device 105 may be used to play media content.

In various embodiments, the media player 110 may include messaging logic 115. Messaging logic 115 may be implemented in hardware, software, or a combination of hardware and software. Suitable hardware may include one or more microprocessors, digital signal processors (DSP), a custom integrated circuit (IC), programmable logic (such as a field-programmable gate array (FPGA), and/or discrete logic). Accordingly, as used herein, logic may refer to logic implemented in hardware (e.g., a logic circuit, programmable logic, etc.), software, and/or hardware and software.

In some embodiments, the media player 110 is configured to receive an encoded bitstream that includes encoded video data, encoded audio data, and message data. For example, in some embodiments, the bitstream may be a moving picture experts group (MPEG) bitstream, which may include video and audio data encoded according to the MPEG standard. In other examples, other media encoding standards may be utilized, including, without limitation, advanced video coding (AVC) also known as H.264, high efficiency video coding (HEVC) also known as H.265, versatile video coding (VVC) also known as H.266, AOMedia Video 1 (AV1), VP9, and audio encoding standards, such as modified discrete cosine transform (MDCT) based algorithms, such as MP3, MPEG-4 Audio (M4A), Advanced Audio Coding (AAC), Ogg Vorbis (OGG), and other types of encoding formats, such as, master quality authenticated (MQA), waveform audio file format (WAV), Free Lossless Audio Codec (FLAC), etc. Thus, the media player 110 may comprise a decoder configured to decode the encoded bitstream (e.g., decode the encoded video data and encoded audio data) to extract audio and video data for playback.

A bitstream, as used herein, refers to a sequence of bits arranged according to a respective format. An encoded bitstream may include data that has been encoded according to a respective standard, as discussed above. Thus, in various examples, the encoded bitstream may refer to the output of a media encoder.

In various embodiments, the bitstream may further include message data. In some examples, the message data may be encoded, based, at least in part, on a coding standard of the encoded video and/or encoded audio data. For example, if the encoded bitstream is coded using the MPEG standard (e.g., MPEG-2), the message data may be encoded according to a respective coding scheme. In one example, message data may be coded by utilizing a start code within the picture header. For example, a start code for user data may be defined as "0x000001B2," and followed by the message data.

Accordingly, in various embodiments, messaging logic 115 of the media player 110 may be configured to extract message data from the encoded bitstream. As described above, messaging logic 115 may first decode an encoded bitstream, which may further include decoding encoded video data and/or encoded audio data, and extracting the message data. In further examples, the encoded bitstream may include encoded message data. Thus, the messaging logic 115 may further be configured to decode the encoded message data from the encoded bitstream, as described above with respect to the various standards.

Accordingly, in various embodiments, extracting message data may include, for example, identifying message data within the encoded bitstream, parsing header information embedded within the bitstream identifying a packet as containing message data, message data length, and message data, as will be described in greater detail below. In yet further examples, extracting message data from the encoded bitstream may further include reading message data into storage (e.g., storing the message data), such as a local storage device (such as a buffer or other storage device) and/or memory.

In yet further embodiments, the messaging logic 115 may be configured to prompt a user to register a telephone number associated with user device 105. In some examples, the messaging logic 115 obtains the telephone number as input to the media player 110 by a user of the user device 105, and associates the telephone number as a recipient of the message data. If a message is received from the registered telephone number, the messaging logic 115 may further identify the message as a response from the user device 105.

As previously described, in some embodiments, message data extracted from an encoded bitstream by the messaging logic 115, along with a registered telephone number associated with the user device 105, may be transmitted by the media player to a messaging server 125, for example, via network 120. Messaging server 125, in some examples, may be a server running a messaging application, and configured to transmit the message data as a text message (e.g., an SMS message, MMS message, and/or RCS message). The text message may, for example, include the contents of the message data. In some further embodiments, header fields from the message data may further be provided to the messaging server 125, for example, identifying from which sender or phone number the text message should originate. The messaging server 125 may, accordingly, transmit the text message to the user device 105 from appropriate sender.

In some examples, the messaging server 125 may transmit the message over the network 120 and/or via a cellular network 130. For example, in some embodiments, the user device 105 may be configured to receive text messages over the internet. In other embodiments, the messaging server 125 may be configured to transmit the message, via the network 120, to an SMSC 135 of a cellular carrier associated with the user device 105.

Accordingly, in various embodiments, the network 120 may include a local area network (LAN), which includes a network that covers, without limitation, a residence, multi-dwelling unit, business, school, campus, commercial premises, etc., or in further examples, a wide area network (WAN), which further includes, without limitation, a service provider network, a customer's home network, a backbone network, the internet or the like. Accordingly, the network 120 may include various types of communication networks through which the user device 105 may receive messages from the messaging server 125. Similarly, cellular network 130 (e.g., a mobile network) may be a telecommunications network over which cellular communication and cellular data may be carried, and through which the user device 105 may send and/or receive messages. In yet further examples, the cellular network 130 itself may be coupled to the network 120.

An SMSC 135 refers to the elements of a cellular network that handles SMS and/or other messaging services. For example, the SMSC 135 may be an application (e.g., software) running a server (or multiple servers) of a cellular network 130, and configured to collect, store, convert, and/or forward text messages (such as SMS messages). In some embodiments, the SMSC 135 may also handle other types of messages, such as MMS messages and/or RCS messages. In other embodiments, messages may be transmitted from the messaging server 125 to an MMS center (MMSC) or other server configured to facilitate the transmission of messages over the cellular network 130.

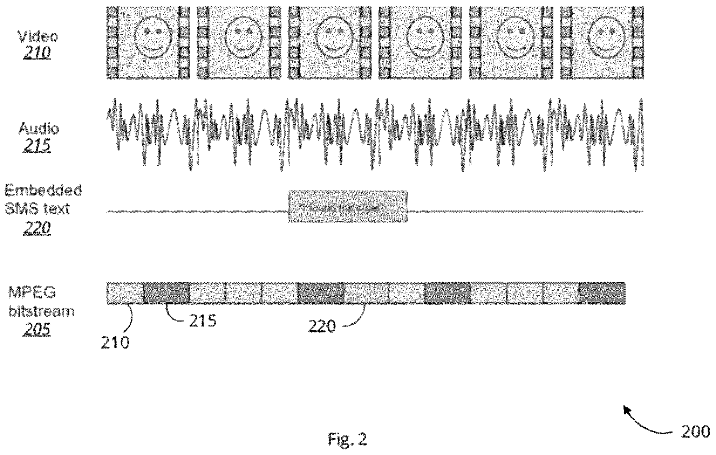

Fig. 2 is a schematic representation of a bitstream 200 with embedded messaging, in accordance with various embodiments. In various examples, the bitstream may include video data 210, audio data 215, and message data 220. It should be noted that the various elements of the bitstream 200 are schematically illustrated in Fig. 2, and that modifications to the various components and other arrangements of the bitstream 200 may be possible and in accordance with the various embodiments.

In some examples, the bitstream 200 may be an MPEG bitstream 205, as previously described. Accordingly, the MPEG bitstream may comprises segments of video data 210, audio data 215, and message data 220. With reference to the elements of Fig. 1, in MPEG-2 transport stream (TS), private data can be embedded according to defined standards. Individual channels (e.g., a television (TV) channel or data channel) within a TS includes video data, audio data, subtitles, etc., which together define a "Service." Each TS may include multiple "Services." Thus, message data may be associated with audio and video data within a "Service."

As previously described, in some examples, packetized elementary stream (PES) headers of the type, "private_stream_1," are defined to have a start code: 0x000001BD. The "private_stream" data structures are used to carry any system information other than MPEG audio and video. Thus, private_stream_1 packets may be used to carry message data in an MPEG bitstream, utilizing an unused "data_identifier" field to signal the message data (e.g., the first byte of the PES data field in a private_stream_1 packet). In various embodiments, by utilizing private_stream_1 packets in MPEG-TS, Presentation Timestamps (PTS) may be utilized by the media player to determine when to send the message data.

In some further examples, message data may be embedded in Dynamic Adaptive Streaming over HTTP (DASH) formatted streams. DASH is a format that allows streaming of video and audio over HTTP through a dynamic adaptive link. DASH defines a syntax for timed metadata, which is currently used for subtitles, which further includes timestamps and user-defined text. In various embodiments, message data may be embedded as timed metadata. Continuing with the example above in the context of DASH, message data may be assigned an "On-start" Dispatch Mode as defined in DASH. Alternatively, an "on-receive" dispatch mode may be utilized. It is to be understood that the examples described above in relation to DASH are provided as examples only, and that embodiments are not limited to DASH formatted streams. For example, in other embodiments, other video streaming standards may be utilized and embedded with message data, including, without limitation, HTTP Live Streaming (HLS), low-latency HLS, Microsoft Smooth Streaming, WebRTC, etc., to name only a few additional examples.

In various examples, to ensure the message data (e.g., a text message, etc.) is handled by the correct application programming interface, a "scheme_uri" value may be assigned to allow a messaging application (e.g., messaging logic 115) to receive the message data. The value may be selected as an unassigned value so as not to conflict with other metadata encoded in the stream. For example, the value may be a string value, such as: "MyStudio SMS messaging\n." Thus, messaging logic 115 may be configured to look for message data from "MyStudio" by subscribing to the respective "scheme_uri" value.

In some examples, the message data may be encoded as a "moof" in a respective media segment, which includes a presentation time, identifier, and message_data(). The "moof" includes an "emsg" box that may be mapped to an Event/Metadata Internal Object (EMIO). Thus, the message data may be inserted in the message_data() field of the EMIO.

Later standards, such as H.264 / H.265, define supplemental enhancement information (SEI) messages, which may be used to carry message data. H.264 and H.265 bitstreams are defined around network abstraction layer (NAL) packets, and a single NAL is called a NAL-unit (NALU). As SEI message packets contain a length field, the receiver (e.g., the media player 110 and/or messaging logic 115 of the media player 110) can parse the message data based on the length field instead of, or in addition to, start codes. This approach makes a more flexible packet by adding any data we want into these packets. In some examples, the message data may be indicated by NAL unit type for "SEIUserUnregistered" NAL unit content.

In various embodiments, a syntax may be defined for the message data depending on a desired usage of the embedded message data. For example, the message data may be an SMS message embedded into the bitstream for one-directional communication (e.g., to be sent to the user device 105). In this context, an example syntax is set forth as follows:

| Unique Identifier (8 bytes) | Message Length (2 bytes) | Message (length=Message Length) |
|---|---|---|
| | | (Maximum size - 65535 bytes) |
| SMS-text | 0d35 | Score update: Illini 87, Michigan 7 |

Thus, the unique identifier field may be used to indicate that the message data is an SMS text message. In some examples, other identifiers may be used to indicate additional types of messages, such as an MMS message, or RCS message.

Two bytes may be allocated to indicate the length of the message, and the message field may contain the contents of the message itself. In the above example, the media player 110 would receive and decode the bitstream, and messaging logic 115 may be configured to extract the message data. In some embodiments, as previously described, extracting the message data may include parsing header information of the message data from the bitstream and storing the message data, for example, in storage and/or memory. Header information, as used herein, refers to information (e.g., fields) within a packet header (e.g., a picture header of PES header). The messaging logic 115 may, in turn, cause an SMS text message to be sent to the user device 105, for example, via the messaging server 125. Thus, the user device 105 may receive an SMS text message displaying: "Score update: Illini 87, Michigan 7." In the context of a live broadcast, a broadcaster may embed the above text during the broadcast of the game itself, or during the broadcast of a different game.

Similarly, the syntax may be adapted to recorded content (e.g., movies or shows that are not broadcast live). For example, in one scene of a movie, character(s) in the scene may send a text message. Message data associated with the scene may be provided with the following syntax:

| Unique Identifier (8 bytes) | Message Length (2 bytes) | Message (length=Message Length) |
|---|---|---|
| | | (Maximum size - 65535 bytes) |
| "SMS-text" | 0d50 | "[Jane] Did you set me up on a blind date with Jon?" |

In this case, the character Jane is asking the user a rhetorical question. The movie may proceed without any regard to the answer. A user may, in turn, receive a text message on their user device 105 with the contents: "[Jane] Did you set me up on a blind date with Jon?" In some examples, another message might come from a different character in the same scene, having the syntax:

| Unique Identifier (8 bytes) | Message Length (2 bytes) | Message (length=Message Length) |
|---|---|---|
| | | (Maximum size - 65535 bytes) |
| "SMS-text" | 0d57 | "[Sue] I just told Jane our plans to go out Saturday night" |

As above, this is rhetorical commentary, no reply is needed. Any reply received can be ignored and the movie proceeds. The user may similarly receive the SMS message on their user device 105, with the contents: "[Sue] I just told Jane our plans to go out Saturday night." In some examples, both messages, may come from the same telephone number, where the sender is indicated in the contents of the message itself.

In other embodiments, messages from different characters may originate from different telephone numbers associated with a respective character. An example syntax for the message data is set forth as follows, continuing with the above two example messages.

| Unique Identifier | Source (1 byte) | Message Length | Message (length=Message Length) |
|---|---|---|---|
| (8 bytes) | | (2 bytes) | (Maximum size - 65535 bytes) |
| "SMS-text" | 0x00 | 0d50 | "[Jane] Did you set me up on a blind date with Jon?" |
| "SMS-text" | 0x01 | 0d57 | "[Sue] I just told Jane our plans to go out Saturday night" |

In this example, the syntax may further include a 1-byte source field, where different values may indicate a different sender, which may further be associated with a different telephone number. Thus, the bitstream messages are tagged with a different source (where each character may be associated with a respective value). The user will see the same result, however the message will be coming from different telephone numbers.

In yet further embodiments, the message data may comprise additional data, such as images, audio, or video. In some examples, the message data may utilize XML or other higher-level languages to define a syntax for multimedia information. Accordingly, in various embodiment, a text message sent to a user device 105 may include images, audio, and/or video data, in addition to or instead of text data.

In the case of two-way communication, the message data may include additional syntax fields for handling messages received from the user device 105. For example, in some embodiments, the message data may include additional syntax fields for state information - such as "waiting for reply." Once a reply is received from the user device 105, the reply may be directed by the messaging server 125 and/or messaging logic 115 to a media server, which may provide a scene or media segment based on the reply message. In further examples, multiple scenes or media segments may be stored locally at the media player 110, and messaging logic 115 may be configured to select a specific scene from a group of scenes based on the reply message from the user device 105.

In yet further embodiments, other actions may be performed responsive to receiving a reply from the user. For example, in some embodiments, an advertisement or other media may be played by the media player. As described above, the advertisement or other media may be stored locally on the media player and/or obtained from a media server to be played responsive to the reply. In further examples, other media may be played, such as, without limitation, alternate scenes or endings, different advertisements, or a recommendation for other shows, different audio cues (e.g., sounds, voices, dialog, etc.), to list only a few possibilities. In some embodiments, the action taken may be performed as a response to receiving the reply from the user. In further examples, the action may be performed based on the contents (e.g., keywords, text, images, files, video, and/or audio) of the reply from the user. For example, the reply may contain text (e.g., keywords) that may be used to select an advertisement to be displayed, or an alternate ending to be played. In other examples, an image or audio in the reply may be parsed for objects and/or words from which an action may be performed. Thus, "keyword" as used in the context above, refers to words or phrases (e.g., a sequence of multiple words) that are used to search for or trigger the action to be performed.

In further embodiments, syntax fields in the message data could be used to indicate a uniform resource locator (URL) address, such as a hypertext transfer protocol secure (HTTPS) link, to a server hosting a chatting application configured to communicate with a user of the user device 105 in two-way communication. The chatting application may include, for example, chatbots, or director-provided commentary. In some examples, the server may further include logic configured to select content for playback by the media player 110, and request playback of the selected content by the media player 110, based on the contents of a conversation between the user of the user device 105 and the chatting application.

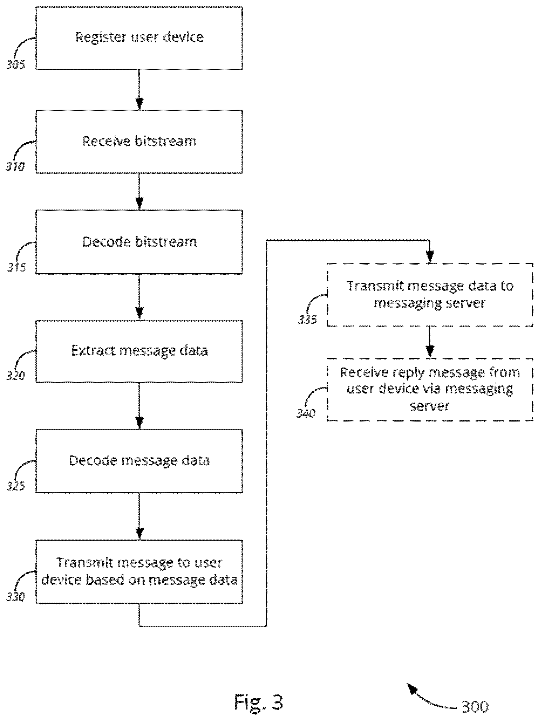

Fig. 3 is a flow diagram of a method 300 for implementing messaging utilizing an interactive bitstream with embedded messaging, in accordance with various embodiments. The method begins, at block 305, by registering a user device. In some embodiments, registering the user device includes prompting a user to register a telephone number associated with user device. In some examples, a telephone number may be input to a media player by a user of the user device, and messaging logic of the media player may be associated the telephone number as a recipient of messages embedded into the bitstream.

At block 310, the method 300 continues by receiving a bitstream. As previously described, the bitstream may be an encoded bitstream, comprising encoded video data, audio data, and/or message data. In various embodiments, the bitstream may be an MPEG bitstream. In other embodiments, other encoding standards may be utilized, such as H.265, H.266, etc. In some examples, the message data may be encoded. In yet further examples, the message data may be formatted according to a message data syntax as previously described with respect to Figs. 1-2.

Accordingly, at block 315, the method 300 includes decoding the bitstream. Decoding the bitstream may include decoding an encoded video data and/or encoded audio data in the bitstream, and further extracting message data from the bitstream, at block 320. As previously described, extracting the message data from the bitstream may include, in some examples, parsing packet header information within bitstream and storing the parsed message data, for example, in a storage device and/or memory for further processing. In further examples, the encoded bitstream may include encoded message data to be decoded. Accordingly, at block 325, decoding the bitstream may further include decoding encoded message data. For example, in some embodiments, encoded message data may include message data that has been formatted according to a syntax as described above. In yet further examples, decoding the message data may include parsing the header data as described above.

The method 300 continues, at block 330, by transmitting the message data to the user device. This may include transmitting a message based on the message data, or transmitting the contents of the extracted message data. Transmitting the message data may include transmitting an SMS message, MMS message, or RCS message, as previously described. Accordingly, in some examples, at block 335, transmitting the message to the user device may include transmitting the message data to a messaging server, to be transmitted to the user device. As previously described, in some embodiments, message data extracted from an encoded bitstream may be provided. In some examples, a registered telephone number associated with the user device may also be provided by the media player to the messaging server. As previously described, the messaging server may be configured to transmit the message data as a text message (e.g., an SMS message, MMS message, and/or RCS message). In some examples, the messaging server may transmit the message over a network and/or cellular network. For example, in some embodiments, the messaging server may be configured to transmit the message to an SMSC on a cellular network / associated with a cellular carrier associated with the user device.

At block 340, the method 300 further includes receiving a reply message from the user device. In some embodiments, the reply message may be received, by the media player and/or messaging logic of the media player, via the messaging server. In some examples, the media player and/or messaging logic may be configured to take an action based on the contents of the reply message. For example, if a message is received from the registered telephone number, the messaging logic may identify the message as a response originating from the user device. As previously described, once a reply is received from the user device, the reply may be directed by the messaging server and/or messaging logic of the media player, to a media server. The media server may provide a scene or media segment based on the reply message. In further examples, multiple scenes or media segments may be stored locally at the media player, and messaging logic may be configured to select a specific scene (e.g., or respective media segments associated with a scene) from a group of scenes based on the reply message from the user device. In yet further embodiments, other actions may be taken responsive to receiving a reply from the user. For example, in some examples, an advertisement or other media may be played by the media player. As described above, the advertisement or other media may be stored locally on the media player and/or obtained from a media server to be played responsive to the reply.

The embodiments set forth above with respect to Figs. 1-3 may be implemented in customized hardware (such as programmable logic controllers, single board computers, FPGAs, custom ICs, and SoCs), and/or particular elements of the above embodiments might be implemented in hardware, software, or both. As such, some embodiments may employ a computer or hardware system (such as a signal processor or other video processing system) to perform processes and functionality in accordance with various embodiments. According to a set of embodiments, some or all of the procedures and/or methods may be performed in response to a processor executing one or more sequences of one or more instructions.

A set of these instructions and/or code might be encoded and/or stored on a non-transitory computer readable storage medium, such as on-chip memory. In other embodiments, the storage medium might be separate from a computer system (i.e., a removable medium, such as a compact disc, etc.), and/or provided in an installation package, such that the storage medium can be used to program, configure, and/or adapt a computer or processor with the instructions/code stored thereon. These instructions might take the form of executable code, which is executable by a computer system and/or processor of the computer system, which, upon compilation and/or installation on the computer system (e.g., using any of a variety of generally available compilers, installation programs, compression/decompression utilities, etc.) then takes the form of executable code.

The terms "machine readable medium" and "computer readable medium," as used herein, refer to any medium that participates in providing data that causes a machine to operate in a specific fashion. In many implementations, a computer readable medium is a non-transitory, physical, and/or tangible storage medium. In some embodiments, a computer readable medium may take many forms, including, but not limited to, non-volatile media, volatile media, or the like. Non-volatile media includes, for example, read-only memory, solid state memory, optical and/or magnetic disks, among other non-volatile storage devices. Volatile media includes, without limitation, dynamic memory, such as DRAM.

Common forms of physical and/or tangible computer-readable media include, for example, a floppy disk, a flexible disk, a hard disk, magnetic tape, or any other magnetic medium, a CD-ROM, any other optical medium, punch cards, paper tape, any other physical medium, a RAM, a PROM, an EPROM, a FLASH-EPROM, any other memory chip or cartridge, a carrier wave as described hereinafter, or any other medium from which a computer can read instructions and/or code.

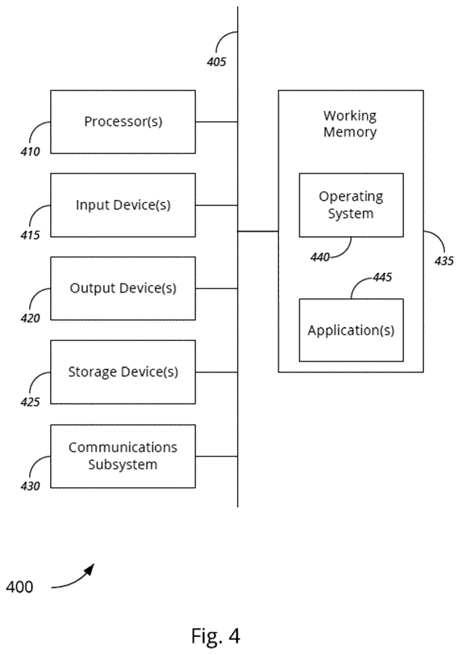

Fig. 4 provides a schematic illustration of one embodiment of a computer system 400, such as the media player 110, or subsystems thereof, such as messaging logic 115, messaging server 125, user device 105, and SMSC 135, or combinations thereof, which may perform the methods provided by various other embodiments, as described herein. It should be noted that Fig. 4 only provides a generalized illustration of various components, of which one or more of each may be utilized as appropriate. Fig. 4, therefore, broadly illustrates how individual system elements may be implemented in a relatively separated or relatively more integrated manner.

The computer system 400 includes multiple hardware elements that may be electrically coupled via a bus 405 (or may otherwise be in communication, as appropriate). The hardware elements may include one or more processors 410, including, without limitation, one or more general-purpose processors and/or one or more special-purpose processors (such as microprocessors, digital signal processing chips, graphics acceleration processors, and microcontrollers); one or more input devices 415, which include, without limitation, a mouse, a keyboard, one or more sensors, and/or the like; and one or more output devices 420, which can include, without limitation, a display device, and/or the like.

The computer system 400 may further include (and/or be in communication with) one or more storage devices 425, which can comprise, without limitation, local and/or network accessible storage, and/or can include, without limitation, a disk drive, a drive array, an optical storage device, solid-state storage device such as a random-access memory ("RAM") and/or a read-only memory ("ROM"), which can be programmable, flash-updateable, and/or the like. Such storage devices may be configured to implement any appropriate data stores, including, without limitation, various file systems, database structures, and/or the like.

The computer system 400 might also include a communications subsystem 430, which may include, without limitation, a modem, a network card (wireless or wired), an IR communication device, a wireless communication device and/or chipset (such as a Bluetooth^{™} device, an 802.11 device, a WiFi device, a WiMax device, a WWAN device, a Z-Wave device, a ZigBee device, cellular communication facilities, etc.), and/or an LP wireless device as previously described. The communications subsystem 430 may permit data to be exchanged with a network (such as the network described below, to name one example), with other computer or hardware systems, between data centers or different cloud platforms, and/or with any other devices described herein. In many embodiments, the computer system 400 further comprises a working memory 435, which can include a RAM or ROM device, as described above.

The computer system 400 also may comprise software elements, shown as being currently located within the working memory 435, including an operating system 440, device drivers, executable libraries, and/or other code, such as one or more application programs 445, which may comprise computer programs provided by various embodiments, and/or may be designed to implement methods, and/or configure systems, provided by other embodiments, as described herein. Merely by way of example, one or more procedures described with respect to the method(s) discussed above might be implemented as code and/or instructions executable by a computer (and/or a processor within a computer); in an aspect, then, such code and/or instructions can be used to configure and/or adapt a general purpose computer (or other device) to perform one or more operations in accordance with the described methods.

A set of these instructions and/or code might be encoded and/or stored on a non-transitory computer-readable storage medium, such as the storage device(s) 425 described above. In some cases, the storage medium might be incorporated within a computer system, such as the system 400. In other embodiments, the storage medium might be separate from a computer system (i.e., a removable medium, such as a compact disc, etc.), and/or provided in an installation package, such that the storage medium can be used to program, configure, and/or adapt a general purpose computer with the instructions/code stored thereon. These instructions might take the form of executable code, which is executable by the computer system 400 and/or might take the form of source and/or installable code, which, upon compilation and/or installation on the computer system 400 (e.g., using any of a variety of generally available compilers, installation programs, compression/decompression utilities, etc.) then takes the form of executable code.

It will be apparent to those skilled in the art that substantial variations may be made in accordance with specific requirements. For example, customized hardware (such as programmable logic controllers, single board computers, FPGAs, ASICs, and SoCs) might also be used, and/or particular elements might be implemented in hardware, software (including portable software, such as applets, etc.), or both. Further, connection to other computing devices such as network input/output devices may be employed.

As mentioned above, in one aspect, some embodiments may employ a computer or hardware system (such as the computer system 400) to perform methods in accordance with various embodiments of the invention. According to a set of embodiments, some or all of the procedures of such methods are performed by the computer system 400 in response to processor 410 executing one or more sequences of one or more instructions (which might be incorporated into the operating system 440 and/or other code, such as an application program 445) contained in the working memory 435. Such instructions may be read into the working memory 435 from another computer-readable medium, such as one or more of the storage device(s) 425. Merely by way of example, execution of the sequences of instructions contained in the working memory 435 might cause the processor(s) 410 to perform one or more procedures of the methods described herein.

In an embodiment implemented using the computer system 400, various computer-readable media might be involved in providing instructions/code to processor(s) 410 for execution and/or might be used to store and/or carry such instructions/code (e.g., as signals). In many implementations, a computer-readable medium is a non-transitory, physical, and/or tangible storage medium. In some embodiments, a computer-readable medium may take many forms, including, but not limited to, non-volatile media, volatile media, or the like. Non-volatile media includes, for example, optical and/or magnetic disks, such as the storage device(s) 425. Volatile media includes, without limitation, dynamic memory, such as the working memory 435. In some alternative embodiments, a computer-readable medium may take the form of transmission media, which includes, without limitation, coaxial cables, copper wire, and fiber optics, including the wires that comprise the bus 405, as well as the various components of the communication subsystem 430 (and/or the media by which the communications subsystem 430 provides communication with other devices). In an alternative set of embodiments, transmission media can also take the form of waves (including, without limitation, radio, acoustic, and/or light waves, such as those generated during radio-wave and infra-red data communications).

Various forms of computer-readable media may be involved in carrying one or more sequences of one or more instructions to the processor(s) 410 for execution. Merely by way of example, the instructions may initially be carried on a magnetic disk and/or optical disc of a remote computer. A remote computer might load the instructions into its dynamic memory and send the instructions as signals over a transmission medium to be received and/or executed by the computer system 400. These signals, which might be in the form of electromagnetic signals, acoustic signals, optical signals, and/or the like, are all examples of carrier waves on which instructions can be encoded, in accordance with various embodiments of the invention.

The communications subsystem 430 (and/or components thereof) generally receives the signals, and the bus 405 then might carry the signals (and/or the data, instructions, etc. carried by the signals) to the working memory 435, from which the processor(s) 410 retrieves and executes the instructions. The instructions received by the working memory 435 may optionally be stored on a storage device 425 either before or after execution by the processor(s) 410.

While some features and aspects have been described with respect to the embodiments, one skilled in the art will recognize that numerous modifications are possible. For example, while various methods and processes described herein may be described with respect to particular structural and/or functional components for ease of description, methods provided by various embodiments are not limited to any particular structural and/or functional architecture but instead can be implemented in any suitable hardware configuration. Similarly, while some functionality is ascribed to one or more system components, unless the context dictates otherwise, this functionality can be distributed among various other system components in accordance with the several embodiments.

Moreover, while the procedures of the methods and processes described herein are described in a particular order for ease of description, unless the context dictates otherwise, various procedures may be reordered, added, and/or omitted in accordance with various embodiments. Moreover, the procedures described with respect to one method or process may be incorporated within other described methods or processes; likewise, system components described according to a particular structural architecture and/or with respect to one system may be organized in alternative structural architectures and/or incorporated within other described systems. Hence, while various embodiments are described with or without some features for ease of description and to illustrate aspects of those embodiments, the various components and/or features described herein with respect to a particular embodiment can be substituted, added and/or subtracted from among other described embodiments, unless the context dictates otherwise. Consequently, although several embodiments are described above, it will be appreciated that the invention is intended to cover all modifications and equivalents within the scope of the following claims.

## Claims

1. An apparatus comprising:
a processor; and
a non-transitory computer-readable medium in communication with the processor, the non-transitory computer-readable medium having encoded thereon a set of instructions executable by the processor to:
receive a bitstream, wherein the bitstream includes encoded message data and at least one of encoded video data and encoded audio data;
extract message data from the bitstream, wherein extracting message data comprises decoding the encoded message data from the bitstream, the encoded message data comprising header information, wherein the header information includes an identifier identifying the encoded message data as message data and a length of the message data, and wherein decoding the encoded message data includes parsing the header information, wherein the message data is extracted from the bitstream based, at least in part, on the header information of the encoded message data; and
transmit, via a network, the message data to a user device.

2. The apparatus of claim 1, wherein the message data is a text message,
in particular,
wherein the text message is a Short Messaging Service (SMS) message or
a Multimedia Messaging Service (MMS) message or
a Rich Communication Services (RCS) message.

3. The apparatus of claim 1 or 2, wherein transmitting the message data to the user device further comprises:
transmitting the message data to a messaging server, wherein the messaging server is configured to transmit the message data to the user device via the network.

4. The apparatus of claim 3, wherein the set of instructions is further executable by the processor to:
register the user device, wherein registering the user device includes obtaining a telephone number associated with the user device, wherein the message data is transmitted, via the messaging server, to the telephone number.

5. The apparatus of claim 3 or 4, wherein the message data includes a first message associated with a first telephone number and a second message associated with a second telephone number, wherein the first message is transmitted to the user device from the first telephone number, and wherein the second message is transmitted to the user device from the second telephone number.

6. The apparatus of any of claims 3 to 5, wherein the set of instructions is further executable by the processor to:
receive, via the messaging server, message data from the user device; and
perform an action based, at least in part, on the message data from the user device.

7. The apparatus of any of any preceding claim, wherein the network is a cellular network.

8. A system comprising:
a server configured to receive message data and transmit message data, wherein the message data is transmitted over a cellular network;
a media player coupled to the server, the media player configured to receive a bitstream, the media player comprising:
a decoder configured to decode the bitstream, wherein decoding the bitstream includes extracting message data, and decoding at least one of encoded video data and encoded audio data; and
messaging logic configured to parse the message data, and
wherein the media player is configured to transmit the message data to a user device via the server.

9. The system of claim 8, wherein the message data is a text message,
in particular, wherein the text message is a Short Messaging Service (SMS) message.

10. The system of claim 8 or 9, wherein transmitting the message data to the user device further comprises:
transmitting the message data to the server, wherein the server is configured to transmit the message data to the user device via the cellular network.

11. The system of claim 10, wherein the messaging logic is further configured to register the user device, wherein registering the user device includes obtaining a telephone number associated with the user device, wherein the message data is transmitted, via the server, to the telephone number.

12. The system of claim 10 or 11, wherein the message data includes a first message associated with a first telephone number and a second message associated with a second telephone number, wherein the first message is transmitted to the user device from the first telephone number, and wherein the second message is transmitted to the user device from the second telephone number.

13. A method comprising:
receiving, via a media player, a bitstream, wherein the bitstream includes encoded message data and at least one of encoded video data and encoded audio data;
extracting, via the media player, message data from the bitstream, wherein extracting message data comprises decoding the encoded message data from the bitstream, the encoded message data comprising header information, wherein the header information includes an identifier identifying the encoded message data as message data and a length of the message data, and wherein decoding the encoded message data includes parsing the header information, wherein the message data is extracted from the bitstream based, at least in part, on the header information of the encoded message data of the bitstream; and
transmitting, via a server, the message data to a user device over a network.

14. The method of claim 13, wherein transmitting the message data to the user device further comprises:
transmitting the message data to a messaging server, wherein the messaging server is configured to transmit the message data to the user device via the network.

15. The method of claim 13 or 14, further comprising:
registering the user device, wherein registering the user device includes obtaining a telephone number associated with the user device, wherein the message data is transmitted, via the server, to the telephone number.
